# EUROPEAN PATENT SPECIFICATION

(11) **EP 4 119 366 B1**
(45) Date of publication and mention of the grant of the patent: **15.11.2023**
(21) Application number: 22185321.1
(22) Date of filing: 15.07.2022
(51) Int. Cl.: B60C 25/05, B60C 25/138

(54) **TIRE CHANGER**
REIFENWECHSELMASCHINE
APPAREIL POUR CHANGEMENT DES PNEUS

(30) Priority: 16.07.2021 IT 202100018722
(43) Date of publication of application: 18.01.2023
(73) Proprietor: Snap-on Equipment Srl a unico socio, 42015 Correggio (RE) (IT)
(72) Inventor: SOTGIU, Paolo, 41125 MODENA (IT)
(74) Representative: Eisenführ Speiser

(56) References cited:
- EP-A1- 2 347 919
- EP-A1- 2 995 477
- EP-A1- 3 677 455

## Description

In the name of: Snap-on Equipment S.r.l., an Italian company with registered offices in Correggio (RE).

### Field of the invention

The present invention relates to an apparatus for mounting a tire on a rim of a wheel and/or for removing a tire from a rim of a wheel of a vehicle, generally known as a tire changer. Also included within the scope of the present invention is a method for mounting a tire on a rim of a wheel and/or for removing a tire from a rim of a wheel of a vehicle, which can be performed by means of a tire changer according to the present invention.

### Prior art

The wheels of vehicles are generally composed of a rim and a tire mounted on it. Tire changers are generally used in car repair workshops in order to remove the tires from the rims and/or to mount said tires on respective rims.

Before a tire can be removed from a rim it is necessary to perform what is referred to as bead breaking of the tire, in other words completely separate both beads of the tire from the rim, using a special bead breaker tool. Only after this operation is it possible to then proceed with the actual operation of removing the tire from the rim, generally using suitable mounting/demounting tools.

There are various types of bead breaker tools, for example of the blade or paddle type, roller type, disk type, etc. Disk tools are particularly widespread on more efficient and modern tire changers. These disk-type bead breaker tools usually comprise a rotatable disk which, sometimes, but not always, has a frustoconical shape and is mounted idle on a support arm. The disk of the bead breaker tool, or bead breaker disk, is placed in contact with the sidewall of the tire of a wheel secured to a rotary support. When the support rotates, the wheel, which is rigidly secured thereto, will also start to rotate, allowing the bead breaker tool to operate on the tire over an entire circumferential revolution and therefore separate completely the bead of the tire from the rim.

In order to successfully complete a bead breaking operation in a short time and without damaging either the sidewall of the tire, the wheel rim or the bead breaker tool itself, it is important to correctly position the tool both relative to the rim and relative to the tire.

In particular, with the wheel stationary, deflated and mounted on the support, the bead breaker disk is brought up to the edge of the rim, usually however without touching the rim but instead making contact with the sidewall of the tire.

In order to perform the actual bead breaking process, the bead breaker disk is preferably moved and advanced - sometimes pivoted - toward the axis of rotation of the wheel, so as to be inserted between the edge of the rim (sometimes, however, touching it) and the tire, thereby starting the gradual separation of the bead of the tire from the rim, rotation of the tire-bearing wheel being started in the meantime.

In order to complete the bead breaking process, it is then usually necessary, during the process itself, to move the bead breaker tool also parallel to the axis of rotation of the wheel, preferably with the tire-bearing wheel still rotating, so as to allow the bead breaker disk to interact better with the sidewall of the tire and/or with the rim channel.

Overall, the movement of the bead breaker tool may be defined as being a trajectory comprising sections involving an advancing movement both in a direction substantially parallel to the axis of rotation of the wheel and in a direction substantially perpendicular to the axis of rotation of the wheel, all of this both toward and if necessary away from the wheel.

Once the bead breaking process has been completed and both beads have been separated, the tire may be completely removed from the rim, usually with the aid of further demounting tools, such as levers, hooks, etc.

Sometimes, the demounting tools are combined with respective mounting tools, or special mounting/demounting tools may be provided, i.e. tools which may perform both the mounting and demounting functions.

These mounting and/or demounting tools, which are often mounted pivotably in more modern and efficient tire changers, must be moved accurately toward and away from the axis of rotation of the wheel, so as to interact better with the sidewall of the tire and/or with the rim channel.

During both demounting and mounting, the movement trajectory of these tools generally comprises sections involving an advancing movement both in a direction substantially parallel to the axis of rotation of the wheel and in a direction substantially perpendicular to the axis of rotation of the wheel, all of this both toward and if necessary away from the wheel.

As mentioned, if this not performed properly, both the bead breaking process and the subsequent tire removal process may not be effective or may not result in complete separation of the tire beads from the rim or may result in damage to the tire, rim or both of them.

Likewise, when mounting a tire on a respective rim, the mounting tool must be positioned precisely relative to the rim, so as to help ensure that the tire is inserted correctly inside the edges of the rim.

In general, it is therefore important to be able to correctly position and move the mounting/demounting, bead breaker, etc. tools, relative to the rim of the wheel and/or relative to the tire, both during the mounting operations and during the demounting operations.

Over time, various solutions have been proposed for helping the operator of a tire changer to correctly position and move the tools with respect to the wheel, both in the case of bead breaker tools and in the case of mounting and/or demounting tools.

These solutions generally involve the use of sensors of various types that can detect the position of the tools and/or the wheel or components of the wheel, which can then be moved automatically thanks to special actuators or, at least partially, with the intervention of an operator. The degree of automation and efficiency of the mounting and/or demounting process, which is generally based on the combined use of sensors and actuators, may thus vary quite widely, according to the different solutions proposed, which use sensors and actuators with different characteristics and levels of performance.

For example, EP1584495A2 discloses a tire changer having a disk-type bead breaker tool, combined with a sensor pin that can detect the presence of the wheel coming into contact with the edge or flange of the rim or with the sidewall of the tire.

EP2484541A1 discloses a tire changer having a disk-type bead breaker tool that can move in a direction parallel to the axis of rotation of the wheel, and has a control unit that can detect the advancing speed curve of the tool in said direction.

EP3722114A1 discloses a tire changer having a bead breaker tool comprising a support element and a bead breaker disk, said bead breaker tool further comprising a sensor able to cause a relative rotation of the support element and the bead breaker disk.

EP1927484A1 discloses a tire changer having optical sensors for identifying the edge of the rim, and automatically moving the mounting/demounting tool.

EP2110270A1 discloses a tire changer having tools, both bead breaker and mounting/demounting tools, that can move, by virtue of actuator means, parallel to the axis of rotation of the wheel and the movement of which in said direction is monitored by a specific sensor. In the solution described by EP2110270A1, the wheel is moved in a direction perpendicular to its axis of rotation, toward and/or away from the tools.

EP2347919A1 discloses a tire changer comprising a vision system having video cameras, for detecting the relative positions of the wheel and tools.

EP2332749A1 discloses a tire changer comprising a vision system, having laser sensors referred to as light section sensors, for determining the geometric dimensions of the wheel.

EP2995477A1 discloses a machine for fitting and removing a tyre from a corresponding wheel rim of a vehicle. The machine comprises a wheel-holder unit, which rotates about a first axis; at least one bead breaker tool, movable along a second axis parallel to the first axis; a roller rotating about a fourth axis parallel to the first axis and configured to move by rotation about a fifth axis spaced from the fourth axis, between an active position where it is in contact with a tyre tread of the wheel mounted on the wheel-holder unit, to a position of non-interference relative to the tyre; at least one sensor connected to the roller for detecting a signal representing a force transmitted to the roller by the tyre; a removal tool, which is movable by rotation about a sixth axis parallel to the first axis and spaced from it, between a first position proximal to the first axis and a second position distal from the first axis, which is movable in a direction parallel to the first axis and movable towards and away from the sixth axis.

EP3677455A1 discloses a vehicle wheel service apparatus. The apparatus comprises: a frame; a plurality of working tools, connected to the frame and movable to perform operations for mounting and/or demounting the tyre relative to the wheel rim; a shaft driven by an actuator rotationally about a longitudinal axis and connectable to the rim; a measuring system for generating vibration signals representing vibrations of the shaft produced by wheel imbalances; a control unit connected to the measuring system to receive the vibration signals; a support device, connected to the frame and movable between an activated position, where it encircles the shaft while still allowing it to rotate, and a deactivated position, where it is spaced from the shaft; a connector, movable between a working position, where it mechanically connects the measuring system to the frame, and a rest position, where the measuring system is mechanically disengaged from the frame.

However, the known solutions may be further improved in terms of reliability, safety, precision and ease of use.

### Object of the invention

In this regard, the Applicant aims to propose a tire changer, and a related method for mounting a tire on a rim and/or for removing a tire from a rim of a vehicle wheel which is, compared to the prior art, of a more simple design, reliable, robust, accurate and easy to maintain.

Another aim of the present invention is to provide a tire changer, and a related method for mounting/demounting a tire on/from a rim, which makes use of sensors for determining the relative positions of the wheel, or components of the wheel, and the tools, which ensures speedy and correct operation, without errors due, for example, to the characteristics of the sensor used, in relation to the speed at which maintenance is performed and/or to the environmental conditions in which the sensor is used.

Another aim of the present invention is to provide a tire changer, and a related method for mounting/demounting a tire on/from a rim, which minimizes the time required for processing of the scanning signal from the sensor and/or any latency which can have a negative effect on the control of the devices for actuating the automatic movement of the tools.

Another aim of the present invention is to provide a tire changer, and a related method for mounting/demounting a tire on/from a rim, which eliminates sensor exposure times, typical, for example, in the case of optical sensors.

Another aim of the present invention is to provide a tire changer, and a related method for mounting/demounting a tire on/from a rim, which eliminates the need for physical contact between the sensor and the wheel, typical, for example, in the case of mechanical contact sensors.

In general, it is an aim of the present invention to provide a tire changer, and a related method for mounting/demounting a tire on/from a rim which allows optimal control of the actuators for moving the tools and/or the wheel, according to the geometric dimensions of the wheel and/or the relative positions between the wheel and the tools, detected by special contactless sensors.

These and other aims of the present invention will be obvious to those skilled in the art from reading the present detailed description and from the attached illustrative drawings.

### Summary of the invention

The Applicant has found that these and further aims are achieved by an apparatus for demounting a tire from a rim of a vehicle wheel and/or for mounting a tire on a rim of a vehicle wheel, for example a tire changer, comprising a rotary support element to which the rim of the wheel is reversibly secured, and having motor means, for example an electric motor, for rotating the rotary support element.

The apparatus according to the invention further comprises at least one mounting and/or demounting tool for mounting the tire on the rim and/or for demounting the tire from the rim, and at least one contactless sensor device, for detecting a distance, with respect to a reference position, of at least one point belonging to the wheel.

The apparatus comprises sensor means for detecting the position of the at least one mounting and/or demounting tool relative to the reference position and a control unit for correlating the position of the at least one mounting and/or demounting tool with the distance of the at least one point belonging to the wheel, relative to the reference position.

The apparatus further comprises at least one actuator, guided by the control unit, for moving the at least one mounting and/or demounting tool as a function of the distance of the at least one point belonging to the wheel with respect to the reference position, and is characterized in that the at least one sensor device comprises a radar system.

In other words, the control unit can act in real time on the actuator used for moving the at least one mounting/demounting tool, on the basis of the scanning data supplied by the at least one sensor device.

According to one embodiment, the radar system operates at frequencies between 300 MHz and 300 GHz.

According to one embodiment, the radar system is a millimeter-wave radar system and operates at frequencies between 30 GHz and 300 GHz. According to a preferred embodiment, the millimeter-wave radar system operates at frequencies between 76 GHz and 81 GHz.

According to one aspect, the reference position is fixed relative to the structure of the base and/or of the frame of the tire changer.

According to one aspect, the reference position is integral with the contactless sensor device.

According to one aspect, the reference position is integral with the at least one mounting and/or demounting tool or with a support structure thereof.

According to one aspect, the reference position is integral with a point belonging to the axis of rotation of the wheel or is in any case located close to the axis of rotation of the wheel.

According to one embodiment, the at least one mounting/demounting tool is moved, toward and/or away, relative to the wheel.

According to one embodiment, the wheel is moved in a direction perpendicular to its axis of rotation, toward and/or away, relative to the at least one mounting/demounting tool.

According to one embodiment, the at least one mounting/demounting tool is moved, toward and/or away, relative to the wheel and at the same time the wheel is moved in a direction perpendicular to its axis of rotation, toward and/or away, relative to the at least one mounting/demounting tool.

According to one possible embodiment, the sensor means for detecting the position of the at least one mounting and/or demounting tool relative to the reference position comprise a radar system, for example a millimeter-wave radar system, preferably of the same type as the contactless sensor device used for detecting the distance, relative to the reference position, of at least one point belonging to the wheel.

According to one embodiment, the at least one contactless sensor device can detect the distance, with respect to the reference position, of a plurality of points belonging to the wheel, preferably belonging to an outer contour of the rim of the wheel.

According to one embodiment, the at least one contactless sensor device can detect the distance, with respect to the reference position, of at least one point belonging to the tire of the wheel, preferably belonging to the sidewall of the tire of the wheel.

According to one embodiment, the tire changer of the present invention comprises a plurality of mounting/demounting tools.

According to one aspect, said plurality of mounting/demounting tools comprises at least one bead breaker tool.

According to one embodiment, the control unit with which the tire changer of the present invention is provided, is connected to memory means for storing, at least temporarily, data relating to geometric characteristics of the wheel.

According to one aspect, said memory means are located on the tire changer.

According to one aspect, said memory means are located on a remote computer system, for example on a cloud.

According to one embodiment, the remote computer system comprises a database comprising data relating to geometric characteristics of wheels, which is constantly updated by tire changers according to the present invention.

The present invention also relates to a method for demounting a tire from a rim of a vehicle wheel or for mounting a tire on a rim of a vehicle wheel, comprising the steps of securing the rim of the wheel to a rotary support element, and of detecting a distance, with respect to a reference position, of at least one point belonging to the wheel by means of at least one contactless sensor device.

The method of the present invention further comprises the steps of detecting the position of at least one mounting and/or demounting tool relative to the reference position, of correlating the position of the at least one mounting and/or demounting tool with the distance of the at least one point belonging to the wheel, relative to the reference position, and of moving, during the operation of mounting the tire on the rim and/or demounting the tire from the rim, the at least one mounting and/or demounting tool as a function of the distance of the at least one point belonging to the wheel with respect to the reference position. The method of the present invention is characterized in that the at least one contactless sensor device comprises a radar system.

According to one embodiment, the method of the present invention uses a radar system which operates at frequencies between 300 MHz and 300 GHz.

According to one embodiment, the method of the present invention uses a millimeter-wave radar system which operates at frequencies between 30 GHz and 300 GHz. According to a preferred embodiment, the millimeter-wave radar system operates at frequencies between 76 GHz and 81 GHz.

Below, by way of example and therefore in a non-limiting manner, a number of preferred embodiments of the present invention will be described.

### Brief description of the drawings

This description will be provided hereinbelow with reference to the attached drawings which are provided solely by way of non-limiting example and in which:
- figure 1 is an axonometric view of an example of a tire changer according to the invention;
- figure 2 schematically shows a tool of the tire changer of figure 1, according to one possible embodiment.

### Detailed description of preferred embodiments of the invention

In the description below, any expressions used, such as "right-hand", "left-hand", "above", "below", "upper", "lower", "horizontal", "vertical" and the like, are used merely for illustrative purposes and refer to the particular arrangement of the elements present in the attached figures and therefore are not limiting in any way.

With reference to the attached figures, 1 denotes overall an apparatus for maintaining vehicle wheels, in particular a tire changer.

The tire changer 1 comprises a base 100 on which there is mounted a rotary wheel support assembly, referred to in short as "support 110", preferably of the plate type, on which a wheel R comprising a rim C and, possibly, a tire P is reversibly clamped using suitable clamping means known per se.

The base 100 has, joined thereto, a frame 200 having an upright 210 extending mainly at right angles with respect to the support surface of the base. In the figure, the upright 210 extends vertically with respect to the horizontal surface on which the base 100 rests. However, the present invention also comprises the possible configuration where the upright 210 extends mainly parallel to the support surface of the base, this being frequently the case of tire changers intended for the wheels of heavy vehicles.

The longitudinal axis L of the upright 210 is therefore, in any case, substantially parallel to the axis of rotation A of the wheel R which is clamped on the support 110, both in the case where this axis of rotation A is vertical and in the case where it is horizontal.

The upright 210 has, associated with it, a support arm 300 movable along the longitudinal axis L, namely in a direction substantially parallel to the axis of rotation A of the wheel R.

The support arm 300 is composed of a first element 301 that can slide in the longitudinal direction L of the upright 210 and a second element 302 which is coupled to the first element 301 and inside which a component or arm-piece 303 can slide, the longitudinal axis X of the latter being substantially parallel to the horizontal support surface of the base 100 and it can therefore move in a direction substantially perpendicular to the axis of rotation of the wheel.

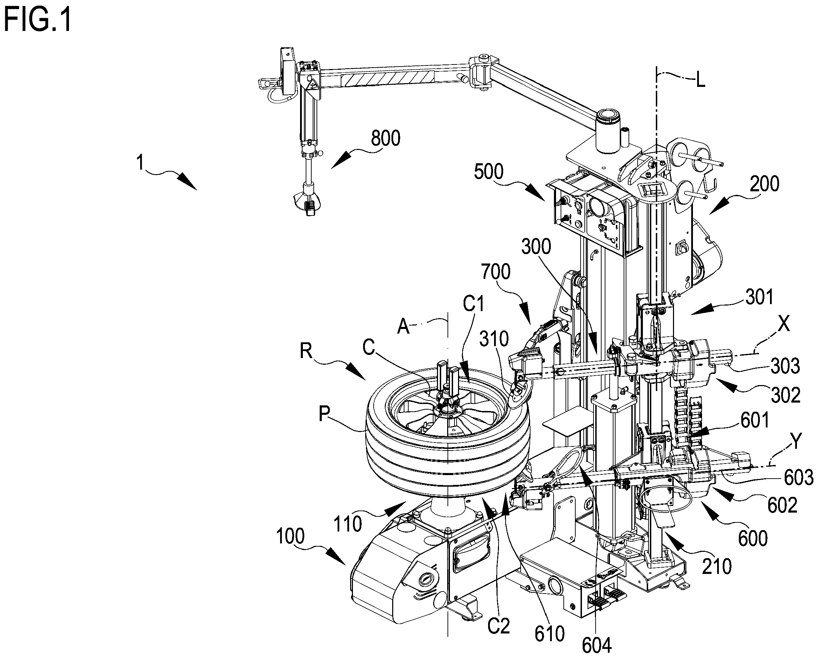

A tool, in the particular case of figure 1 a bead breaker disk 310, is mounted pivotably on one end of the support arm 300, in particular on one end of the arm-piece 303.

The embodiments shown in the attached figures therefore refer to pivoting tools, the movement trajectories thereof therefore comprising at least one oscillation of the tool relative to the respective support arms or their components; however, the present invention must be understood as being applicable also in the case where the tools are not of the pivoting type and the movement trajectories of the tools do not comprise any oscillation relative to the respective support arms.

The bead breaker disk 310 is mounted idle on the support arm 300 and is designed to operate on the wheel R in the vicinity of a first edge C1, or upper edge, of the rim C. In other words, the bead breaker disk 310 is designed to operate on the first bead, or upper bead, of the tire P.

The tire changer according to figure 1 also comprises a second support arm 600, which is also movable along the longitudinal axis L, namely in a direction substantially parallel to the axis of rotation A of the wheel R.

The second support arm 600 comprises a first element 601 that can slide in the longitudinal direction L of the upright 210 and a second element 602 which is coupled to the first element 601 and inside which a component or arm-piece 603 can slide, the longitudinal axis Y of the latter being substantially parallel to the horizontal support surface of the base 100 and it can therefore move in a direction substantially perpendicular to the axis of rotation of the wheel.

A tool, in the particular case of figure 1 a bead breaker disk 610, is mounted pivotably on one end of the support arm 600, in particular on one end of the arm-piece 603.

The bead breaker disk 610 is mounted idle on the support arm 600 and is designed to operate on the wheel R in the vicinity of a second edge C2, or lower edge, of the rim C. In other words, the bead breaker disk 610 is designed to operate on the second bead, or lower bead, of the tire P.

In the rest of the present description, reference will be made mainly to the support arm 300 carrying the bead breaker disk 310 designed to operate on the upper bead of the tire P. However, the functions of the second support arm 600 and of the associated bead breaker disk 610 designed to operate on the lower bead of the tire P are entirely similar and, therefore, for the sake of conciseness, the description provided in relation to the first support arm will not be repeated for said second support arm 600. In fact, in general the sole difference presented by the second support arm 600 is that it comprises, in addition to the bead breaker disk 610, a further pivoting tool 604 designed to facilitate the mounting of the lower bead, this further pivoting tool 604 being known per se, for example from the patent E P2949487A 1.

In the description below, the further pivoting tool 604 will not be described in detail. However, the present invention, which will instead be described in detail in relation to the bead breaker tool 310, must be clearly understood as being applicable also to the further pivoting tool 604.

The tire changer shown in figure 1 further comprises a mounting/demounting tool 700, for example but not necessarily pivoting, for mounting the tire P on the rim and/or for removing, once the bead breaking operation has been completed, the tire P from the rim C.

In the description below, the pivoting mounting/demounting tool 700 will not be described in detail. However, the present invention, which will instead be described in detail in relation to the bead breaker tool 310, must be clearly understood as being applicable also to the pivoting mounting/demounting tool 700.

The tire changer shown in the figures also comprises an auxiliary tool 800, known per se, designed to facilitate the mounting and demounting operations.

In the description below, the auxiliary tool 800 will not be described in detail. However, the present invention, which will instead be described in detail in relation to the bead breaker tool 310, must be clearly understood as being applicable also to the auxiliary tool 800.

Moreover, as mentioned above, the present invention must be understood as being applicable also in the case where the bead breaker tools 310, 610 or the mounting/demounting tool 700 are not of the pivoting type.

In the attached figures, the mounting/demounting tool 700 is not provided with actuators for controlling pivoting thereof, while the bead breaker disks 310, 610 are provided with specific pneumatic actuators mounted on the respective arm-piece 303, 603 and designed to cause pivoting thereof. The present invention must therefore be understood as being applicable, for any type of tool, also in the case where said actuators mounted on the support arms are not present and/or are replaced by any mechanical devices such as cams, springs, hinged mechanisms, and the like, and the movement of the tools is caused solely by the vertical movement of the respective support arms, in general controlled by means of actuators.

Similarly, in the description below, the support assembly 110 is mounted fixed with respect to the base 100; however, the present invention must be understood as being applicable also to the case where the support 110 is mounted in such a way as to be movable with respect to the base, in particular toward and/or away from the upright 210 of the frame 200, or the tools.

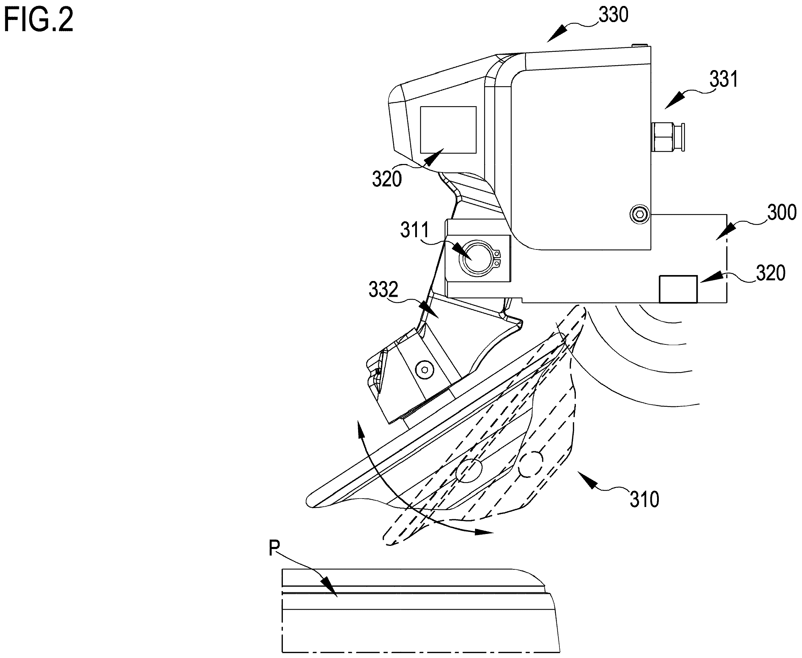

With reference to figure 2, the bead breaker disk 310 mounted idle on the support arm 300 is shown before the start of the bead breaking operation, in the two positions, retracted/advanced with respect to the axis of rotation A of the wheel.

During the bead breaking operation, the bead breaker disk 310 is positioned, by an operator by means of a handle (not shown) or at least partially or completely automatically, by the use of actuators, in the vicinity of the tire P and substantially at the upper edge C1 of the rim, without however generally touching it. This movement of the bead breaker tool generally is performed by moving the support arm or a component thereof both in a direction substantially parallel to the axis of rotation of the wheel, and in a direction substantially perpendicular to this axis of rotation.

Optionally, the support arm which supports the bead breaker tool may also be rotated about the longitudinal axis L of the upright 210, in a plane substantially parallel to the support surface of the base 100 of the tire changer.

The bead breaker disk 310 is mounted pivotably on the support arm 300 by means of a bracket 332 hinged with the pivot pin 311 of the support arm 300.

In the embodiment shown in figure 2, the sensor 320 is mounted on the support arm 300 of the bead breaker disk 310 and comprises a scanning radar system, preferably a millimeter-wave (known as mmWave in English) radar system.

The term millimeter-wave refers to the spectrum of radio waves with frequencies between 30 and 300 GHz, or with a wavelength ranging between 1 and 10 millimeters.

Preferably, the radar system of the present invention operates at frequencies between 76 and 81 GHz, corresponding to a wavelength of around 4 mm.

A complete mmWave radar system comprises radiofrequency (RF) transmitter (Tx) and receiver (Rx) components, analog components, such as a clock oscillator and digital components, such as analog/digital convertors (ADC), microcontrollers (MCU) and digital signal processors (DSP).

These components, including the antenna, may be miniaturized and incorporated in a single chip, and are available from a number of manufacturers; for example see the families of mmWave sensors under the names IWRx and AWRx supplied by the company Texas Instruments Incorporated. Such a radar system may be incorporated in at least one, or more, contactless sensor devices. By virtue of the millimeter-wave propagation characteristics, the contactless sensor devices of the present invention use the electromagnetic waves reflected by objects in their path to determine the position, speed and distance of those objects.

The contactless sensor device 320 can thus detect a distance between a reference point, for example integral with said sensor, and at least one point belonging to the wheel to be maintained. Since the dimensions of the bead breaker disk 310 are known, as are the distance and/or the relative positions between the contactless sensor device 320 and the bead breaker disk 310, it is thus possible to accurately determine the distance between the bead breaker disk 310 and the wheel.

The sensor device 320 is in general able to acquire the distances relating to a plurality of points of the wheel, belonging for example to an outer contour of the rim of the wheel and/or belonging to the tire of the wheel, preferably belonging to the sidewall of the tire of the wheel.

Thus, the actuators (known per se and not shown in detail) with which the tire changer is equipped can control, with accuracy, the support arm 300 at least in an area of space close to the wheel.

In the present detailed description, reference is frequently made to the pivoting of the tool; the contactless sensor device 320 can therefore provide, to a control unit 400, information useful for controlling the actuation of said pivoting. However, in general, the scanning data supplied by the contactless sensor device 320 may be used to control the actuation of any other movement of the tools with which the tire changer is provided, both in the case where said tools are pivoting and in the case where they are not.

The actuators, for example those assigned to the movement of the support arm 300 in the direction of the longitudinal axis L of the upright 210 or in a direction substantially perpendicular to the direction of the longitudinal axis L of the upright 210, are generally provided with sensor means, for example potentiometers, pressure sensors, etc., that can determine the position in said directions of the support arm 300 relative to the upright 210.

Such sensor means, together with the contactless sensor device 320, are operationally connected to the control unit 400, which can control the abovementioned actuators.

The contactless sensor device 320 can also detect when the distance between the bead breaker disk 310 and the wheel is such that it is appropriate to command pivoting thereof.

Alternatively or in addition, the pivoting command may be sent when the contactless sensor device 320 detects rotation of the wheel.

In any case, the contactless sensor device 320 will send an appropriate signal to the control unit 400 of the tire changer 1, which will activate the tire actuator 330 which, by means of a shaft 331 (shown partially in the figure), will pivot the bracket 332 about the pivot pin 311, causing it to rotate clockwise.

Thus, the bead breaker disk 310 will be oscillated clockwise, reaching a second position which, with respect to the previous position, is closer to the axis of rotation A of the wheel R.

In this second position, the bead breaker disk 310 can be inserted under the edge C1 of the rim and effectively place pressure on the sidewall of the tire, thereby separating the bead of the tire from the rim, as the wheel R is rotated by the support 110.

Often, in this step, the support arm 300 of the tool 310 is also duly moved, by means of suitable actuators, in a direction substantially parallel to the axis of rotation A of the wheel, toward the wheel, so as to exert greater pressure on the tire and facilitate the separation of the bead from the rim.

Using the data on the distance between the tool and the wheel supplied by the contactless sensor device 320, the control unit 400 can automatically and accurately control said actuators during at least part of the bead breaking process.

In this step, in general, the bead breaker disk can come into contact both with the tire and with the rim.

Once the bead breaking operation is complete, the bead breaker tool 310 will be moved away from the wheel, and the bead breaker disk will return to its initial position retracted from the axis of rotation A of the wheel R.

The contactless sensor device 320 with which the support arm 300 of the bead breaker disk 310 is provided, can accurately acquire data relating to the geometry of the wheel to be handled. Such data may be shared and used by the tire changer to control other tools with which it is provided, and/or may be saved, at least temporarily, on memory means both locally and remotely (for example, on a cloud), accessible to the control unit 400.

Using these data, the tire changer of the present invention, and possibly other tire changers connected on a network, may, by means of suitable machine learning and/or artificial intelligence algorithms, be trained to handle the wheel to be maintained with increasing speed, efficiency and accuracy.

The pivoting command sent by the control unit 400 to the tire actuator 330 may be sent either when the sensor 320 detects contact (or the reaching of a predetermined suitable distance) between the wheel and the tool, irrespective of any other conditions, or as a function of other conditions being fulfilled, in addition to the detection of said predetermined distance or contact between the wheel and the tool.

For example, in one possible embodiment, the control unit is designed to send the pivoting command only if it is verified that the wheel is, at the same time, placed in rotation. Such verification may be performed by the control unit in various ways, for example by monitoring the power consumed by an electric motor (known per se and not shown in the figures) used to rotate the support 110, or by detecting rotation of the support 110 directly, for example using an encoder, or by means of optical sensors or other types of sensors, and even possibly using the scanning data supplied by said contactless sensor device 320 (or by another similar contactless sensor device) which can not only detect distance but also position (for example inclination) and speed of the objects scanned.

In another embodiment, the control unit sends the pivoting command only if it is verified that the tool is in the correct position, established for example by the manufacturer of the tire changer or by the operator, relative to the wheel. This monitoring of the position of the tool may for example be performed through the use of potentiometric sensors associated with the support arm 300 or with the arm-piece 303, and/or through the use of optical sensors that can detect the position of the edge of the tire, or possibly through the use of another contactless sensor device, comprising a radar system according to the invention, or possibly even through the use of the same contactless sensor device 320 already included in the tire changer.

The above description relating to the bead breaker tool 310 may be likewise applied also to other tools with which the tire changer is provided, for example the contactless sensor device 320 comprising a radar system may also be mounted on the mounting/demounting tool 700 and/or on the auxiliary tool 800 and/or on the further pivoting tool 604. It is also possible to include a contactless sensor device comprising a radar system according to the invention possibly also in the base 100 and/or the frame 200 and/or the upright 210 of the tire changer.

The tire changer may therefore have one or more contactless sensor devices comprising a radar system, mounted in different positions. Such contactless sensor devices may be mounted in fixed positions or on moving components (for example on the tools or on the respective support elements), and the position, distance and speed data detected thereby may be assessed with respect to both fixed reference positions and movable reference positions.

### List of references

- 1: tire changer
- R: wheel
- P: tire
- C: rim
- C1: first edge of the rim C
- C2: second edge of the rim C
- 100: base
- 110: support for receiving and rotating the wheel R
- A: axis of rotation of the wheel R
- 200: frame
- 210: upright
- L: longitudinal axis of the upright 210
- 300: (first) support arm
- 301: first element of the (first) support arm
- 302: second element of the (first) support arm
- 303: arm-piece of the (first) support arm
- X: longitudinal axis of the (first) support arm
- 310: (first) bead breaker disk
- 311: pivot pin
- 320: contactless sensor device
- 330: actuator for pivoting the (first) bead breaker disk
- 332: bracket
- 331: shaft
- 400: control unit
- 600: (second) support arm
- 601: first element of the (second) support arm
- 602: second element of the (second) support arm
- 603: arm-piece of the (second) support arm
- 610: (second) bead breaker disk
- 604: further pivoting tool
- Y: longitudinal axis of the (second) support arm
- 700: mounting/demounting tool
- 800: auxiliary tool

## Claims

1. A method for demounting a tire (P) from a rim (C) of a vehicle wheel (R) or for mounting a tire (P) on a rim of a vehicle wheel, comprising the steps of
securing the rim (C) of the wheel (R) to a rotary support element (110);
detecting a distance, with respect to a reference position, of at least one point belonging to the wheel (R) by means of at least one contactless sensor device (320); detecting the position of at least one mounting and/or demounting tool (310; 610; 700; 800; 604) relative to the reference position;
correlating the position of the at least one mounting and/or demounting tool with the distance of the at least one point belonging to the wheel, relative to the reference position;
moving, during the operation of mounting the tire (P) on the rim (C) and/or demounting the tire (P) from the rim (C), the at least one mounting and/or demounting tool (310; 610; 700; 800; 604) as a function of the distance of the at least one point belonging to the wheel with respect to the reference position;
**characterized in that** the at least one contactless sensor device (320) comprises a radar system.

2. The method as claimed in claim 1, wherein the radar system operates at frequencies between 300 MHz and 300 GHz.

3. The method as claimed in claim 2, wherein the radar system is a millimeter-wave radar system and operates at frequencies between 30 GHz and 300 GHz, preferably between 76 GHz and 81 GHz.

4. The method as claimed in any one of claims 1 to 3, wherein the at least one contactless sensor device (320) can detect the distance, with respect to the reference position, of a plurality of points belonging to the wheel.

5. The method as claimed in claim 4, wherein the at least one contactless sensor device (320) can detect the distance, with respect to the reference position, of an outer contour of the rim of the wheel.

6. The method as claimed in to any one of claims 1 to 3, wherein the at least one contactless sensor device (320) can detect the distance, with respect to the reference position, of at least one point belonging to the tire of the wheel, preferably belonging to the sidewall of the tire of the wheel.

7. An apparatus (1) for demounting a tire (P) from a rim (C) of a vehicle wheel (R) or for mounting a tire (P) on a rim (C) of a vehicle wheel (R), comprising:
a rotary support element (110) to which the rim (C) of the wheel (R) is reversibly secured;
motor means for rotating the rotary support element (110);
at least one mounting and/or demounting tool (310; 610; 700; 800; 604) for mounting the tire on the rim and/or for demounting the tire from the rim;
at least one contactless sensor device (320), for detecting a distance, with respect to a reference position, of at least one point belonging to the wheel;
sensor means for detecting the position of the at least one mounting and/or demounting tool (310; 610; 700; 800; 604) relative to the reference position;
a control unit (400) for correlating the position of the at least one mounting and/or demounting tool (310; 610; 700; 800; 604) with the distance of the at least one point belonging to the wheel, relative to the reference position;
at least one actuator, guided by the control unit (400), for moving the at least one mounting and/or demounting tool (310; 610; 700; 800; 604) as a function of the distance of the at least one point belonging to the wheel with respect to the reference position;
**characterized in that**
the at least one sensor device (320) comprises a radar system.

8. The apparatus as claimed in claim 7, wherein the radar system operates at frequencies between 300 MHz and 300 GHz.

9. The apparatus as claimed in claim 8, wherein the radar system is a millimeter-wave radar system and operates at frequencies between 30 GHz and 300 GHz, preferably between 76 GHz and 81 GHz.

10. The apparatus as claimed in any one of claims 7 to 9, wherein the at least one contactless sensor device (320) can detect the distance, with respect to the reference position, of a plurality of points belonging to the wheel, preferably belonging to an outer contour of the rim of the wheel.

11. The apparatus as claimed in any one of claims 7 to 9, wherein the at least one contactless sensor device (320) can detect the distance, with respect to the reference position, of at least one point belonging to the tire of the wheel, preferably belonging to the sidewall of the tire of the wheel.

12. The apparatus as claimed in any one of claims 7 to 11, comprising a plurality of mounting/demounting tools.

13. The apparatus as claimed in claim 12, wherein the plurality of mounting/demounting tools comprises at least one bead breaker tool.

14. The apparatus as claimed in any one of claims 7 to 13, wherein the control unit (400) is connected to memory means for storing, at least temporarily, data relating to geometric characteristics of the wheel.

15. The apparatus as claimed in claim 14, wherein the memory means are located on a remote computer system.

## Patentansprüche

1. Verfahren zum Demontieren eines Reifens (P) von einer Felge (C) eines Fahrzeugrades (R) oder zum Montieren eines Reifens (P) auf eine Felge eines Fahrzeugrades, das die folgenden Schritte umfasst:
Befestigen der Felge (C) des Rades (R) an einem drehbaren Stützelement (110);
Erfassen eines Abstandes, mit Bezug auf eine Referenzposition, von wenigstens einem Punkt, der zu dem Rad (R) gehört, mittels wenigstens einer berührungslosen Sensorvorrichtung (320);
Erfassen der Position wenigstens eines Montage- und/oder Demontagewerkzeugs (310; 610; 700; 800; 604) relativ zu der Referenzposition;
Korrelieren der Position des wenigstens einen Montage- und/oder Demontagewerkzeugs mit dem Abstand des wenigstens einen zu dem Rad gehörenden Punktes relativ zu der Referenzposition;
Bewegen des wenigstens einen Montage- und/oder Demontagewerkzeugs (310; 610; 700; 800; 604) während des Vorgangs der Montage des Reifens (P) auf der Felge (C) und/oder der Demontage des Reifens (P) von der Felge (C) in Abhängigkeit von dem Abstand des wenigstens einen zu dem Rad gehörenden Punktes bezüglich der Referenzposition;
**dadurch gekennzeichnet, dass** die wenigstens eine berührungslose Sensorvorrichtung (320) ein Radarsystem umfasst.

2. Verfahren nach Anspruch 1, wobei das Radarsystem bei Frequenzen zwischen 300 MHz und 300 GHz arbeitet.

3. Verfahren nach Anspruch 2, wobei das Radarsystem ein Millimeterwellen-Radarsystem ist und bei Frequenzen zwischen 30 GHz und 300 GHz, vorzugsweise zwischen 76 GHz und 81 GHz, arbeitet.

4. Verfahren nach einem der Ansprüche 1 bis 3, wobei die wenigstens eine berührungslose Sensorvorrichtung (320) den Abstand von mehreren Punkten des Rades bezüglich der Referenzposition erfassen kann.

5. Verfahren nach Anspruch 4, wobei die wenigstens eine berührungslose Sensorvorrichtung (320) den Abstand einer Außenkontur der Felge des Rades bezüglich der Referenzposition erfassen kann.

6. Verfahren nach einem der Ansprüche 1 bis 3, wobei die wenigstens eine berührungslose Sensorvorrichtung (320) den Abstand wenigstens eines Punktes, der zu dem Reifen des Rades gehört, vorzugsweise zu der Seitenwand des Reifens des Rades gehört, bezüglich der Referenzposition erfassen kann.

7. Vorrichtung (1) zum Demontieren eines Reifens (P) von einer Felge (C) eines Fahrzeugrades (R) oder zum Montieren eines Reifens (P) auf eine Felge (C) eines Fahrzeugrades (R), umfassend:
ein drehbares Stützelement (110), an dem die Felge (C) des Rades (R) reversibel befestigt ist;
Motormittel zum Drehen des drehbaren Stützelements (110);
wenigstens ein Montage- und/oder Demontagewerkzeug (310; 610; 700; 800; 604) zum Montieren des Reifens auf der Felge und/oder zum Demontieren des Reifens von der Felge;
wenigstens eine berührungslose Sensorvorrichtung (320) zum Erfassen eines Abstands von wenigstens einem zu dem Rad gehörenden Punkt relativ zu einer Referenzposition;
Sensormittel zum Erfassen der Position des wenigstens einen Montage- und/oder Demontagewerkzeugs (310; 610; 700; 800; 604) relativ zu der Referenzposition;
eine Steuereinheit (400) zum Korrelieren der Position des wenigstens einen Montage- und/oder Demontagewerkzeugs (310; 610; 700; 800; 604) mit dem Abstand des wenigstens einen zu dem Rad gehörenden Punktes relativ zu der Referenzposition;
wenigstens eine von der Steuereinheit (400) geführte Betätigungseinrichtung zum Bewegen des wenigstens einen Montage- und/oder Demontagewerkzeugs (310; 610; 700; 800; 604) in Abhängigkeit von dem Abstand des wenigstens einen zu dem Rad gehörenden Punktes bezüglich der Referenzposition;
**dadurch gekennzeichnet, dass** die wenigstens eine Sensorvorrichtung (320) ein Radarsystem umfasst.

8. Vorrichtung nach Anspruch 7, wobei das Radarsystem bei Frequenzen zwischen 300 MHz und 300 GHz arbeitet.

9. Vorrichtung nach Anspruch 8, wobei das Radarsystem ein Millimeterwellen-Radarsystem ist und bei Frequenzen zwischen 30 GHz und 300 GHz, vorzugsweise zwischen 76 GHz und 81 GHz, arbeitet.

10. Vorrichtung nach einem der Ansprüche 7 bis 9, wobei die wenigstens eine berührungslose Sensorvorrichtung (320) den Abstand mehrerer Punkte, die zu dem Rad gehören, vorzugsweise zu einer Außenkontur der Felge des Rades gehören, bezüglich der Referenzposition erfassen kann.

11. Vorrichtung nach einem der Ansprüche 7 bis 9, wobei die wenigstens eine berührungslose Sensorvorrichtung (320) den Abstand wenigstens eines Punktes, der zu dem Reifen des Rades gehört, vorzugsweise zu der Seitenwand des Reifens des Rades gehört, bezüglich der Referenzposition erfassen kann.

12. Vorrichtung nach einem der Ansprüche 7 bis 11, die mehrere Montage-/Demontagewerkzeuge umfasst.

13. Vorrichtung nach Anspruch 12, wobei die mehreren Montage-/Demontagewerkzeuge wenigstens ein Wulstabdrückwerkzeug umfassen.

14. Vorrichtung nach einem der Ansprüche 7 bis 13, wobei die Steuereinheit (400) mit Speichermitteln verbunden ist, um zumindest vorübergehend Daten zu speichern, die sich auf geometrische Merkmale des Rades beziehen.

15. Vorrichtung nach Anspruch 14, wobei die Speichermittel in einem entfernten Computersystem angeordnet sind.

## Revendications

1. Procédé destiné à démonter un pneu (P) d'une jante (C) d'une roue de véhicule (R) ou à monter un pneu (P) sur une jante d'une roue de véhicule, comprenant les étapes de
fixation de la jante (C) de la roue (R) à un élément support rotatif (110) ;
détection d'une distance, par rapport à une position de référence, d'au moins un point appartenant à la roue (R) au moyen d'au moins un dispositif capteur sans contact (320) ;
détection de la position d'au moins un outil de montage et/ou de démontage (310 ; 610 ; 700 ; 800 ; 604) par rapport à la position de référence ;
corrélation de la position dudit au moins un outil de montage et/ou de démontage avec la distance dudit au moins un point appartenant à la roue, par rapport à la position de référence ;
déplacement, pendant l'opération de montage du pneu (P) sur la jante (C) et/ou de démontage du pneu (P) de la jante (C), dudit au moins un outil de montage et/ou de démontage (310 ; 610 ; 700 ; 800 ; 604) en fonction de la distance dudit au moins un point appartenant à la roue par rapport à la position de référence ;
**caractérisée en ce que** ledit au moins un dispositif capteur sans contact (320) comprend un système radar.

2. Procédé selon la revendication 1, le système radar fonctionnant à des fréquences situées entre 300 MHz et 300 GHz.

3. Procédé selon la revendication 2, le système radar étant un système radar à ondes millimétriques et fonctionnant à des fréquences situées entre 30 GHz et 300 GHz, de préférence entre 76 GHz et 81 GHz.

4. Procédé selon l'une quelconque des revendications 1 à 3, ledit au moins un dispositif capteur sans contact (320) pouvant détecter la distance, par rapport à la position de référence, d'une pluralité de points appartenant à la roue.

5. Procédé selon la revendication 4, ledit au moins un dispositif capteur sans contact (320) pouvant détecter la distance, par rapport à la position de référence, d'un contour externe de la jante de la roue.

6. Procédé selon l'une quelconque des revendications 1 à 3, ledit au moins un dispositif capteur sans contact (320) pouvant détecter la distance, par rapport à la position de référence, d'au moins un point appartenant au pneu de la roue, de préférence appartenant au flanc du pneu de la roue.

7. Appareil (1) destiné à démonter un pneu (P) d'une jante (C) d'une roue de véhicule (R) ou à monter un pneu (P) sur une jante (C) d'une roue de véhicule (R), comprenant :
un élément support rotatif (110) auquel la jante (C) de la roue (R) est fixée de manière réversible ;
des moyens moteurs destiné à faire tourner l'élément support rotatif (110) ;
au moins un outil de montage et/ou de démontage (310 ; 610 ; 700 ; 800 ; 604) destiné monter le pneu sur la jante et/ou à démonter le pneu de la jante ;
au moins un dispositif capteur sans contact (320), destiné à détecter une distance, par rapport à une position de référence, d'au moins un point appartenant à la roue ;
des moyens de capteur destinés à détecter la position dudit au moins un outil de montage et/ou de démontage (310 ; 610 ; 700 ; 800 ; 604) par rapport à la position de référence ;
une unité de commande (400) destinée à corréler la position dudit au moins un outil de montage et/ou de démontage (310 ; 610 ; 700 ; 800 ; 604) avec la distance dudit au moins un point appartenant à la roue, par rapport à la position de référence ;
au moins un actionneur, guidé par l'unité de commande (400), destiné à déplacer ledit au moins un outil de montage et/ou de démontage (310 ; 610 ; 700 ; 800 ; 604) en fonction de la distance dudit au moins un point appartenant à la roue par rapport à la position de référence ;
**caractérisé en ce que**
ledit au moins un dispositif capteur (320) comprend un système radar.

8. Appareil selon la revendication 7, le système radar fonctionnant à des fréquences situées entre 300 MHz et 300 GHz.

9. Appareil selon la revendication 8, le système radar étant un système radar à ondes millimétriques et fonctionnant à des fréquences situées entre 30 GHz et 300 GHz, de préférence entre 76 GHz et 81 GHz.

10. Appareil selon l'une quelconque des revendications 7 à 9, ledit au moins un dispositif capteur sans contact (320) pouvant détecter la distance, par rapport à la position de référence, d'une pluralité de points appartenant à la roue, appartenant de préférence à un contour externe de la jante de la roue.

11. Appareil selon l'une quelconque des revendications 7 à 9, ledit au moins un dispositif capteur sans contact (320) pouvant détecter la distance, par rapport à la position de référence, d'au moins un point appartenant au pneu de la roue, de préférence appartenant au flanc du pneu de la roue.

12. Appareil selon l'une quelconque des revendications 7 à 11, comprenant une pluralité d'outils de montage/démontage.

13. Appareil selon la revendication 12, la pluralité d'outils de montage/démontage comprenant au moins un outil de décollage des bourrelets.

14. Appareil selon l'une quelconque des revendications 7 à 13, l'unité de commande (400) étant connectée à des moyens de mémoire pour stocker, au moins temporairement, des données relatives à des caractéristiques géométriques de la roue.

15. Appareil selon la revendication 14, les moyens de mémoire étant situés sur un système informatique distant.
